# EUROPEAN PATENT APPLICATION

(11) **EP 4 654 494 A1**
(43) Date of publication of application: **26.11.2025**
(21) Application number: 24382555.1
(22) Date of filing: 24.05.2024
(51) Int. Cl.: H04B 10/2575

(54) **A METHOD OF COMMUNICATING DATA BETWEEN A RADIO UNIT OF A RADIO ACCESS NETWORK AND A BASEBAND UNIT OF THE RADIO ACCESS NETWORK, A RADIO UNIT, A BASEBAND UNIT AND A COMPUTER PROGRAM**

(71) Applicant: Vodafone Group Services Limited, Newbury RG14 2FN (GB)
(72) Inventor: DARIOL, Vaifro, London, W2 6BY (GB); CAFFARENA FERNÁNDEZ, Gabriel, London, W2 6BY (GB); CABALLER RUIZ, Sebastián, London, W2 6BY (GB)
(74) Representative: Boult Wade Tennant LLP

(57) **Abstract**

A method of communicating data between a radio unit of a radio access network and a baseband unit of the radio access network is provided. The radio unit and the baseband unit are communicatively coupled via an optical communications link. The method comprises communicating an analogue optical data signal between the radio unit and the baseband unit via the optical communications link.

## Description

### Field of the invention

The present invention relates to communicating data between a radio unit of a telecommunications network and a baseband unit of the telecommunications network. In particular, the invention relates to methods of transmitting data via an optical communications link.

### Glossary

3GPP - 3rd Generation Partnership Project
ABS - Advanced Base Station
AP - Access Point
ASIC - Application-Specific-Integrated-Circuit
BB - Base Band.
BBU - BaseBand Unit
BS - Base Station
BSS - Basic Service Set
BTS - Base Transceiver Station
CDMA - Code Division Multiple Access
CD-ROM - Compact Disc Read-Only Memory
CFR - Crest Factor Reduction
CRS - Cell-specific Reference Signal
CSI-RS - Channel State Information Reference Signal
CU - Central Unit
DFE - Digital Front End
DL - Downlink
DPD - Digital Pre-Distortion
DSP - Digital-Signal-Processor
DU - Distributed Unit or Digital Unit
DVD-ROM - Digital Versatile Disc Read-Only Memory
eCPRI - evolved Common Public Radio Interface
EDGE - Enhanced Data Rates for GSM Evolution
EEPROM - Electrically Erasable Programmable Read-Only Memory
eNB - Evolved Node B
EPROM - Erasable Programmable Read-Only Memory
ESS - Extended Service Set
E-UMTS - Evolved UMTS
E-UTRA - Evolved UTRA
FDD - Frequency Division Duplex
FDMA - Frequency Division Multiple Access
FFT - Fast Fourier Transform
FPGA - Field-Programmable-Gate-Array
FPPGAs - Field-Programmable Photonic Gate Array
gNB - Next-Generation Node B
GPRS - General Packet Radio Service
GSM - Global System for Mobile Communications (2G)
GSMA - GSM Association
IEEE - Institute of Electrical and Electronics Engineers
IF - Intermediate Frequency
iFFT - inverse Fast Fourier Transform
LTE - Long Term Evolution (4G)
LTE-A - LTE-Advanced
MAC - Medium Access Control
MC-FDMA - Multicarrier Frequency Division Multiple Access
MNO - Mobile Network Operator
MS - Mobile Station
MT - Mobile Terminal
NB - Node B (Radio Base Station Receiver)
NR - New Radio (5G)
O-CU - Open Central Unit
O-DU - Open Distributed Unit
OFDMA - Orthogonal Frequency Division Multiple Access
ORAN - Open RAN
O-RAN - Open RAN Alliance
O-RU - Open Radio Unit
PA - Power Amplifier
PDA - Personal Digital Assistant
PDCP - Packet Data Convergence Protocol
PHY - Physical Layer
PS - Processing Server
RAM - Random-Access Memory
RAN - Radio Access Network
RF - Radio Frequency
RLC - Radio Link Control
ROM - Read-Only Memory
RRC - Radio Resource Control
RU - Radio Unit
SC-FDMA - Single Carrier Frequency Division Multiple Access
SDAP - Service Data Adaptation Protocol
SRAN - Single RAN (not-open RAN)
SS - Subscriber Station
TDD - Time Division Duplex
TDMA - Time Division Multiple Access
TE - Terminal Equipment
TRP - Transmission and Reception Point
UE - User Equipment
UL - Uplink
UMTS - Universal Mobile Telecommunications System (3G)
UTRA - Universal Terrestrial Radio Access
WDM - Wavelength-Division Multiplexing

### Background

The functionality provided by a Radio Access Network is provided by several functional elements in the RAN. Typically, functionality for sending and receiving radio signals is provided by one or more Radio Units (RUs). In some examples, functionality for demodulating the radio signals and converting to digital data streams for transmission to the core network is provided by a Baseband Unit (BBU). In other examples, the BBU is further divided into separate functional elements, which are described as Distributed Units (DUs) and Centralized Units (CUs). Disaggregating the BBU functionality into separate functional elements may improve flexibility by allowing MNOs to locate functionality between the functional elements, which may be used to improve performance and scalability. Disaggregation of the BBU functionality is described in 3GPP TR 38.801, which is herein incorporated by reference.

In order to facilitate disaggregation of functionality, hardware and software components must be interoperable. Open RAN is a technology architecture concept directed to decoupling the hardware and software components of a Radio Access Network (RAN). It is a RAN that includes open interoperable interfaces and virtualization. In prior art (Non-Open) SRANs, the hardware and software components are typically proprietary. S RAN equipment is generally obtained from a single vendor to ensure seamless functionality, security, and efficiency. In contrast, Open RAN introduces open standards for both hardware and software, enabling interoperability among various network elements. For Mobile Network Operators (MNOs), Open RAN holds strategic importance as it promotes vendor diversity, allowing the integration of new suppliers and enhancing supply chain resilience. It also brings energy efficiency gains by enabling targeted improvements in specific areas of the RAN. Furthermore, Open RAN facilitates innovation and competition by providing a more dynamic and efficient network environment. Additionally, it provides an opportunity for collaboration with specialist suppliers and facilitates resource optimization by allowing upgrades to software, without necessitating hardware replacements. Open RAN is important in the long-term network innovation strategy of MNOs, offering energy efficiency, supply chain diversification, resilience enhancement, and facilitating innovation and competition.

Some network functions may be provided by different functional elements depending on the network design. In particular, the distribution of functionality between CU and DU may be different depending on the implementation. The distribution may be selected based on a number of criteria, such as environment (e.g., urban or rural), cost, performance, load management and use case (gaming, voice, and video applications may have different latency tolerances, for example).

In some examples, the DU may be located within an edge network of the MNO network. The CU may be located in a core network of the MNO network.

The way that functionality is split between the RU, DU and CU may be different depending on the specific use-case and implementation. In one example, which is referred to as "split 7.2x", the RU is responsible for a lower portion of layer 1 (L1, PHY), the DU is responsible for a higher portion of layer 1 (L1, PHY) and a lower portion of layer 2 (L2), which contains the data link layer and scheduling functions, while the CU is responsible for a higher portion of layer 2, as well as layer 3 (L3, network layer) functions. In some examples, the RU is configured to perform Beam Forming, iFFT, CFR, DPD, DFE, Frequency shift operations and Power Amplification (PA). In some examples, the DU is configured to perform the scrambling, modulation, layer mapping, precoding, resource element mapping, I/Q compression elements, MAC elements and RLC elements. In some examples, the CU is configured to perform the PDCP elements and RRC/SDAP elements.

Other options for splitting functionality between the functional elements also exist. In another example, which is referred to as "split 8.0", the DU is also responsible for the lower portion of layer 1. Further alternatives also exist, such as "Option-6", in which the RU is responsible for the higher portion of layer 1.

In some examples, each DU is connected to one or more RUs via a fronthaul interface. The fronthaul interface may comprise an optical or electrical connection between the DU and the one or more RUs. Where the fronthaul interface comprises an optical connection, the fronthaul interface may also incorporate photonic technology for increasing data transmission rates and reducing latency.

In some examples, the fronthaul interface is an evolved Common Public Radio Interface (eCPRI), in which a binary representation of the baseband signal is created and sent via an optical interface in a digital representation. The signal is received in optical form at the RU and converted to digital-electrical representation.

### Summary

The methods proposed in this disclosure aim to improve energy efficiency of data transmission via the fronthaul interface. The proposed methods also aim to reduce the number of components and losses due to transformations between the electrical and optical domains. The proposed methods also aim to provide increased flexibility by increasing the number of feasible options for configuring the network.

A method of communicating data between a radio unit of a radio access network and a baseband unit of the radio access network is provided. The radio unit and the baseband unit are communicatively coupled via an optical communications link. The method comprises communicating an analogue optical data signal between the radio unit and the baseband unit via the optical communications link.

Where this disclosure refers to an "analogue" signal, this refers to a signal whose value varies continuously over time. This is in contrast to a digital signal, in which the signal is quantized into discrete values and varies periodically in time. For example, a binary digital signal may take only two possible values to represent ones and zeroes. The signal values may be described as "high" and "low" (or "on" and "off").

In addition to reducing data rates and improving latency, use of photonic technology in the fronthaul interface may also reduce energy consumption and enhance signal processing performance in the RAN. Photonic technology may also provide capability to process high and low frequency signals.

The radio access network may be an Open Radio Access Network, Open RAN. The radio unit may be an Open Radio Unit, O-RU. The baseband unit may be an Open Distributed Unit, O-DU.

The baseband unit may comprise an Open Distributed Unit, O-DU, and an Open Central Unit, O-CU.

The optical communications link may comprise one or more optical fibres.

The radio unit and the baseband unit may be communicatively coupled via a fronthaul interface. The fronthaul interface may comprise the optical communications link.

The method may further comprise multiplexing the analogue optical data signal with a digital optical data signal. The method may further comprise communicating the digital optical data signal between the radio unit and the baseband unit via the optical communications link.

The analogue optical data signal may relate to data plane data and the digital optical data signal may relate to control plane data.

The method may further comprise performing one or more (PHY layer) operations on the optical analogue data signal using a photonic processor.

The one or more operations may comprise one or more of:
beamforming;
Fast Fourier Transform, FTT;
inverse Fast Fourier Transform, iFTT;
Crest Factor Reduction, CFR;
Digital Pre-Distortion; and
frequency shift.

These processing operations may be performed more efficiently in the optical domain than the electrical domain. Therefore, the RAN may operate more efficiently by performing these operations on the optical signal before the signal is converted back to an electrical signal.

The analogue optical data signal may be communicated at intermediate frequency.

Communicating the signal at intermediate frequency may remove the need for frequency shift of the signal because it is possible to select an intermediate frequency already at Radio Frequency.

In the context of the fronthaul interface, "upstream" may refer to data communicated from the RU to the BBU and "downstream" may refer to data communicated from the BBU to the RU.

An electrical signal communicated between the BBU and the RU typically requires frequency shift or modulation with a carrier frequency, because electrical signals are more susceptible to noise. Therefore, communicating the signal as an analogue optical signal, rather than a digital analogue signal may remove the need for modulation and therefore improve the energy efficiency of the RAN.

Moreover, communicating the signal at baseband frequency makes analogue to digital (A2D) conversion simple.

The method may further comprise converting (at the RU) between an analogue electrical data signal and the analogue optical data signal.

The method may further comprise converting (at the baseband unit) between the analogue optical data signal and a digital electrical data signal.

The signal may be converted between the analogue optical data signal and the digital electrical data signal in both the upstream and downstream directions.

Converting between the analogue optical data signal and the digital electrical data signal may comprise:
converting between the analogue optical data signal and a second analogue electrical data signal; and
converting between the second analogue electrical data signal and the digital electrical data signal.

Resource mapping may be performed on the analogue electrical signal.

The radio access network may comprise a plurality of radio units communicatively coupled with the baseband unit via the optical communications link.

The method may further comprise communicating an analogue optical data signal between the second radio unit and the baseband unit via the optical communications link.

The optical communications link may comprise a separate optical fibre for each of the plurality of radio units. The optical communications link may further comprise a path switch or optical splitter to communicate the optical analogue signal between the baseband unit and each radio unit.

A radio unit configured to perform any of the methods described above is also provided.

A baseband unit (or DU) configured to perform any of the methods described above is also provided.

A computer program comprising instructions that, when executed on a processor, cause the processor to perform any of the methods described above is also provided. The processor may comprise one or more processing elements. The processing elements may comprise one or more digital electrical processors, one or more digital photonic processors, and/or one or more analogue photonic processors.

A photonic processor configured to perform any of the methods described above is also provided.

### Brief description of the drawings

Fig. 1 illustrates an example of eCPRI double conversion to and from optical data in a fronthaul interface, represented for split 7.2x.
Fig. 2 illustrates an example of eCPRI double conversion to and from optical data in a fronthaul interface, represented for split 8.0.
Fig. 3 illustrates elements of the transmission chain in which processing may be performed on an optical analogue signal for split 7.2x.
Fig. 4 illustrates elements of the transmission chain in which processing may be performed on an optical analogue signal for split 8.0.
Fig. 5 illustrates the overall connectivity schematic according to a specific example, for a fronthaul interface between two DUs and two RUs.

### Detailed description

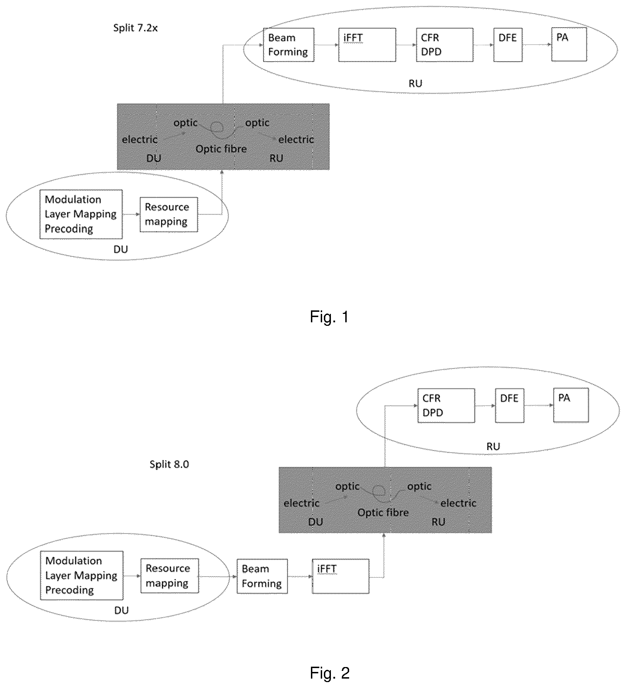

It is an object of the present disclosure to provide an improved fronthaul interface between the BBU (e.g., the DU of the BBU) and the RU. Depending on the type of functional split used in the RAN, the fronthaul interface between the BBU and the RU may be implemented in different ways. In some examples, the fronthaul interface may be between the functional blocks in the transmission chain representing the lower portion of layer 1 and the higher portion of layer 1 (in the case of split 7.2x). Fig. 1 illustrates an example of double conversion to and from optical data in a fronthaul interface, represented for split 7.2x.

In other examples, the fronthaul interface may be implemented between the lower portion of layer 1 and the RF functions (in the case of split 8.0). Fig. 2 illustrates an example of double conversion to and from optical data in a fronthaul interface, represented for split 8.0.

Various signal processing operations are performed in the RU. For example, the RU may perform Crest Factor Reduction and Digital Pre-Distortion operations. In some examples, the RU also comprises a Digital Front End (DFE) that converts the signal to an analogue electrical signal, either in Radio Frequency or in an Intermediate Frequency that would require a frequency shift to higher frequency prior to transmission. Finally, the signal is pre-amplified, and then amplified.

The transmission chain may also include FFT and inverse FFT processing operations, as well as beamforming operations. Depending on the functional split used, these may be performed by the RU (in the case of split 7.2x) or the DU (in the case of split 8.0).

To provide energy savings the present disclosure proposes to introduce a new standard for the fronthaul interface between the RU and the BBU, in which data is communicated in optical-analogue format. This data format may also allow the possibility of using photonic computation for one or more processing steps in the transmission chain.

In some examples, the RU is one of the devices in the network that consumes the most power. Some of the processing operations may be performed more energy efficiently in the optical domain. For example, processing operations such as beamforming, Digital Pre-Distortion, and frequency shift may be performed on an analogue optical data signal using photonic processors, more efficiently than equivalent processing operations performed on an electrical digital signal by digital processors. Therefore, by converting signal processing for one or more processing operations to the optical domain, the overall power consumption of the network may be reduced.

Performing signal processing on an optical signal may also improve performance as compared to processing a digital signal. For example, performing frequency shift on an optical signal may result in less noise than performing the equivalent operation on an electrical signal.

For example, beamforming may require complex multiplications to control how the signal is delayed in different directions to achieve overall direction of the signal. In the optical domain, beamforming may be performed by making use of specific physical effects of light and tailoring different light path lengths to achieve the same result in a much simpler way.

In some examples, the order of processing operations may be adjusted to selectively move processing operations to the optical domain. For example, beamforming (which may be performed prior to iFFT in the electrical domain) may be performed after iFFT in the optical domain. This is because the tailoring of light path lengths is best performed in the time domain.

Digital Pre-Distortion may be performed more efficiently in the optical domain when the signal is in the frequency domain. Therefore, DPD, which may be performed after iFFT in the electrical domain, may be performed prior to iFFT in the optical domain.

Whilst many of the processing operations described above may be performed more efficiently in the optical domain, it is not necessary that all of the processing operations are converted into the optical domain. In some examples (e.g., in the case of split 8.0), DPD may be performed in the electrical domain while iFFT is performed in the optical domain. In other examples, both DPD and iFFT may be performed in the electrical domain.

Converting only specific elements of the transmission chain to the analogue optical domain may require multiple conversion steps between digital electrical and optical analogue signals (and/or optical digital signals). These conversions may be inefficient and may increase power consumption. Therefore, to improve performance, the present disclosure proposes to communicate the data signal via the fronthaul interface in optical analogue format and perform the signal processing operations on the optical analogue signal, without converting the signal back to electrical digital format. This may allow processing operations to be performed in the optical domain, without increasing the number of conversions between signal formats.

In some prior art examples, the fronthaul interface between the BBU and the RU comprises an optical communications link. However, the data is communicated in optical digital format in prior art examples. In contrast, the present disclosure proposes to communicate the data between the BBU and the RU in optical analogue format. This may be implemented in some examples by using a different coupler to communicate the data via the optical fibre.

In some prior art examples, the signal is converted into analogue format by a Digital Front End (DFE) element of the RU before being transmitted in analogue format by the RF antenna. In contrast, according to the present disclosure, the baseband signal may be converted at the DU from digital binary into analogue optic and the signal may be sent to the RU via the fronthaul interface in analogue format. Therefore, the RU may perform all the processing in analogue format and may not need to convert the signal to digital format.

In some examples, the baseband signal may be converted at the DU from digital binary into optical analogue format immediately before transmission via the fronthaul interface. Alternatively, the signal may be converted into optical analogue format earlier in the transmission chain and processing operations in the DU may be performed in the optical domain. For example, beamforming and iFFT (which are performed by the DU for split 8.0) may be performed in the optical domain. Moreover, resource mapping (performed by the DU for split 7.2x and split 8.0) may be performed in the optical domain.

The signal may be converted directly from digital electrical format to optical analogue format. Alternatively, the signal may be converted from digital electrical format to digital analogue format and then from digital analogue format to optical analogue format. Some processing operations may be performed on the signal in digital analogue format. For example, resource mapping may be performed in analogue.

In some prior art methods, the optical digital signal received by the RU via the fronthaul interface is converted to an electrical digital signal by the RU and then back to an optical signal, this time in analogue. Therefore, by converting the fronthaul interface to optical analogue and performing the processing in the optical domain, two electrical-optical conversion steps in the RU may be removed, as compared to prior art methods.

Processing blocks in the transmission chain that are adjacent to the fronthaul interface may be suitable candidates for performing processing in the optical domain, rather than the electrical domain, without requiring additional conversion steps. Likewise, if a processing block is converted to the optical domain, then the adjacent processing block immediately upstream or downstream may also be converted to the optical domain, without requiring additional conversion steps.

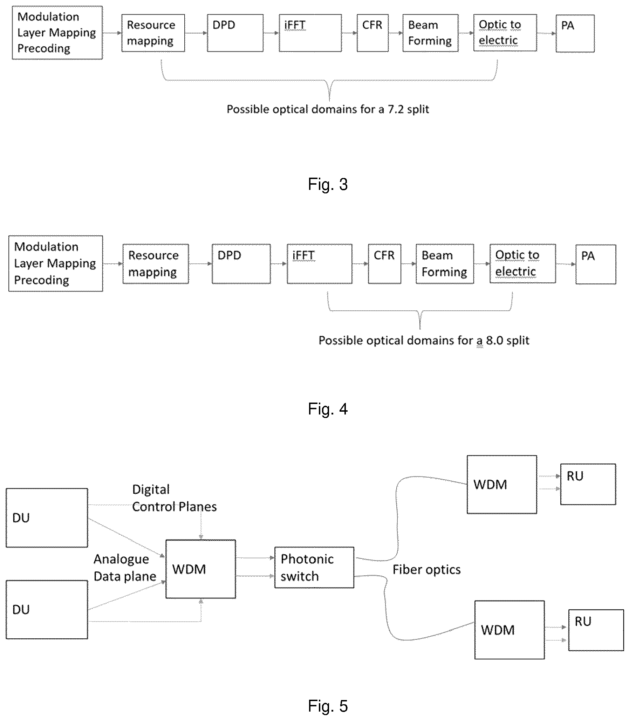

Fig. 3 illustrates elements of the transmission chain in which processing may be performed on an optical analogue signal for split 7.2x.

Fig. 4 illustrates elements of the transmission chain in which processing may be performed on an optical analogue signal for split 8.0.

In some examples, WDM modulation may be used to colour-modulate the control plane as a 100MHz Ethernet digital stream into a single optical fibre.

WDM path switches may be used to create dynamic association between RUs and DU. For example, two RUs may be physically connected to the same DU and the traffic may be split between the two RUs during the day and sent to a single RU during the night.

Fig. 5 illustrates the overall connectivity schematic according to a specific example, for a fronthaul interface between two DUs and two RUs.

Depending on the functional split used, different blocks are required to be converted. Split 7.2x is specified by the Open RAN Alliance (in standards referred to as "O-RAN") but Open RAN in general may be implemented with other functional splits, such as split 8.0. The process might involve changes in the approach, for example beamforming may be preferably implemented in the time domain (so may preferably be performed prior to FFT and/or after iFFT) and FFT may be difficult to implement in the optical domain (so may be implemented in the electrical domain).

Although specific embodiments have been described above, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment or with reference to multiple embodiments are also provided, even if that combination has not been explicitly detailed herein.

Where this application refers to a server, for instance, this may actually be a pair of servers (primary and failover), for redundancy.

Where this application refers to a "network entity", the skilled person would understand that the network entity may actually be provided by a plurality of servers that are geographically distributed.

An Open Radio Access Network as described above may be used to provide a cellular network serving one or more User Equipments, UEs. Examples of the UE include various fixed and mobile devices that transmit and receive user data and/or various kinds of control information to and from a base station. The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above examples are described in relation to specific radio access networks (e.g., 5G radio access networks), these methods, techniques, apparatuses, and systems may be applied to a variety of wireless multiple access systems. Examples of multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems. Moreover, the technical features of the present invention may be applied to future iterations of multiple access systems defined in 3GPP standards, such as (but not limited to) 6G.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more FPPGAs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Any of the methods described herein may be implemented as computer software or a "computer program". The computer program may be configured to control a network entity (e.g., a server or group of servers) to perform any method according to the disclosure. A network entity (e.g., a server or group of servers) within a cellular network may also be provided, configured to operate in accordance with certain methods disclosed herein. For example, the network entity may include a processor and at least one communication interface, particularly comprising one or both of a transmitter and receiver.

A storage medium and a transmission medium carrying the computer program are also provided. The computer program may comprise one or more instructions, or code, that, when executed by a computer, causes the methods described to be performed. A computer program may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EPROM, EEPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a UE, a network entity, a server or a cell) means "one or more" (for instance one or more UEs, one or more network entities, one or more servers, or one or more cells). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

## Claims

1. A method of communicating data between a radio unit of a radio access network and a baseband unit of the radio access network, wherein the radio unit and the baseband unit are communicatively coupled via an optical communications link, the method comprising:
communicating an analogue optical data signal between the radio unit and the baseband unit via the optical communications link.

2. The method of claim 1, wherein the radio access network is an Open Radio Access Network, Open RAN, wherein the radio unit is an Open Radio Unit, O-RU, wherein the baseband unit is an Open Distributed Unit, O-DU.

3. The method of any preceding claim, wherein the optical communications link comprises one or more optical fibres.

4. The method of any preceding claim, wherein the radio unit and the baseband unit are communicatively coupled via a fronthaul interface and wherein the fronthaul interface comprises the optical communications link.

5. The method of any preceding claim, further comprising:
multiplexing the analogue optical data signal with a digital optical data signal; and
communicating the digital optical data signal between the radio unit and the baseband unit via the optical communications link.

6. The method of claim 5, wherein the analogue optical data signal relates to data plane data and the digital optical data signal relates to control plane data.

7. The method of any preceding claim, further comprising:
performing one or more operations on the optical analogue data signal using a photonic processor.

8. The method of claim 7, wherein the one or more operations comprise one or more of:
beamforming;
Fast Fourier Transform, FTT;
inverse Fast Fourier Transform, iFTT;
Digital Pre-Distortion; and
frequency shift.

9. The method of any preceding claim, wherein the analogue optical data signal is communicated at intermediate frequency.

10. The method of any preceding claim, further comprising:
converting between an analogue electrical data signal and the analogue optical data signal; and/or
converting between the analogue optical data signal and a digital electrical data signal.

11. The method of claim 10, wherein converting between the analogue optical data signal and the digital electrical data signal comprises:
converting between the analogue optical data signal and a second analogue electrical data signal; and
converting between the second analogue electrical data signal and the digital electrical data signal.

12. The method of any preceding claim, wherein the radio access network comprises a plurality of radio units communicatively coupled with the baseband unit via the optical communications link

13. A radio unit configured to perform the method of any preceding claim.

14. A baseband unit configured to perform the method of any of claims 1 to 12.

15. A computer program comprising instructions that, when executed on a processor, cause the processor to perform the method of any of claims 1 to 12.
